# EUROPÄISCHE PATENTSCHRIFT

(11) **EP 3 601 973 B1**
(45) Veröffentlichungstag und Bekanntmachung des Hinweises auf die Patenterteilung: **28.04.2021**
(21) Anmeldenummer: 17719798.5
(22) Anmeldetag: 31.03.2017
(51) Int. Cl.: G01L 1/10, G01L 5/16

(54) **KRAFTSENSOR**
FORCE SENSOR
CAPTEUR DE FORCE

(43) Veröffentlichungstag der Anmeldung: 05.02.2020
(73) Patentinhaber: Technische Universität Wien, 1040 Wien (AT)
(72) Erfinder: DABSCH, Alexander, 1130 Wien (AT); KEPLINGER, Franz, 1210 Wien (AT); ROSENBERG, Christoph, 2542 Kottingbrunn (AT)
(74) Vertreter: KLIMENT & HENHAPEL
(86) Internationale Anmeldenummer: PCT/AT2017/060082
(87) Internationale Veröffentlichungsnummer: WO 2018/176069

(56) Entgegenhaltungen:
- WO-A2-2011/163058
- JP-A- S61 194 325
- US-A- 5 095 763

## Beschreibung

### GEBIET DER ERFINDUNG

Die vorliegende Erfindung betrifft ein System umfassend einen Kraftsensor, gemäß dem Oberbegriff des Anspruchs 1.

### STAND DER TECHNIK

In der Praxis werden zur Messung von Kräften üblicherweise Dehnmessstreifen verwendet, welche an Bauteilen, die Kräften ausgesetzt sind und sich dabei verformen, befestigt werden. Über die ermittelte Dehnung kann so indirekt auf die Kraft rückgerechnet werden. Dehnmessstreifen sind zwar relativ genau und können bei Verwendung mehrerer, quer zueinander angeordneter Dehnmessstreifen auch zur Vermessung von Kraftvektoren in zumindest zwei Dimensionen verwendet werden. Grundsätzliche Probleme ergeben sich jedoch bei der Bestimmung von Druckkräften sowie durch Imperfektionen bei der Montage der Dehnmessstreifen, welche üblicherweise durch Kleben erfolgt.

Darüberhinaus treten bei gewissen Anwendungen, insbesondere bei Anwendungen der Biologie und/oder Medizin, sehr kleine Kräfte im Bereich von kleiner gleich 1 µN oder sogar kleiner gleich 1 nN (also im Piko-Newton-Bereich) auf. Derart kleine Kräfte können mit Dehnmessstreifen üblicherweise nicht gemessen werden.

Aus der WO 2011/163058 A2 ist eine Vorrichtung zur Messung der Masse von Zellen bekannt, wobei die Vorrichtung eine Art Plattform umfasst, auf der Zellen anordenbar sind und die an mehreren Armen aufgehängt ist und schwingen kann. Ein Metallfilm auf der Plattform und den Armen kann mittels einer Stromquelle mit Wechselstrom beaufschlagt werden kann, sodass es in einem Magnetfeld eines Permanentmagneten aufgrund der Lorentz-Kraft zur Erzwingung von Schwingungen der Plattform kommt, wobei die Resonanzfrequenz von der Masse der auf der Plattform befindlichen Zelle abhängt, was wiederum deren Bestimmung ermöglicht.

Aus der JP S61 194325 A ist ein Kraftsensor gemäß dem Oberbegriff des Anspruchs 1 bekannt.

Aus der US 5095763 A ist ein Kraftsensor bekannt, der einen Balken umfasst, der wiederum zu Schwingungen angeregt werden kann, wobei die Resonanzfrequenz von einer angelegten Kraft bzw. Spannung abhängt. Die Schwingungsanregung kann, wenn es sich um einen metallischen Balken handelt, durch Beaufschlagen mit einem Wechselstrom mittels eines Oszillators in einem Magnetfeld erfolgen.

### AUFGABE DER ERFINDUNG

Es ist daher Aufgabe der vorliegenden Erfindung, eine verbesserte Möglichkeit zur Messung von Kräften zu schaffen, die die oben geschilderten Nachteile vermeidet. Insbesondere sollen sehr kleiner Kräfte, vorzugsweise bis in den pN-Bereich, gemessen werden können.

### DARSTELLUNG DER ERFINDUNG

Kern der Erfindung zur Lösung der genannten Aufgabe ist es, einen Kraftsensor mit einer Schwingstruktur zur Verfügung zu stellen, welche Schwingstruktur in einem Magnetfeld durch Beaufschlagung mit Wechselstrom zum Schwingen angeregt werden kann und deren Resonanzfrequenz sich ändert, wenn eine auf den Kraftsensor einwirkende Kraft zu einer Verzerrung des Kraftsensors führt. Die resultierende Verstimmung der Resonanzfrequenz ist ein Maß für die Größe der Verzerrung und somit für die Größe der einwirkenden Kraft. Durch Dimensionierung und Design der Struktur des Kraftsensors, insbesondere als MEMS (micro electro mechanical system), und in Abhängigkeit vom Auflösungsvermögen der Frequenzmessung können somit sehr kleine Kräfte gemessen werden, die im nN-oder sogar pN-Bereich liegen.

Daher ist es bei einem System umfassend einen Kraftsensor, der Kraftsensor umfassend einen Rahmen sowie eine Schwingstruktur, die mehrere Arme aufweist und im Rahmen frei schwingen kann, vorgesehen, wobei die Arme an Aufhängungsbereichen des Rahmens fixiert sind und zumindest abschnittsweise quer zueinander verlaufen, wobei der Kraftsensor so ausgelegt ist, dass sich die Aufhängungsbereiche zumindest teilweise räumlich relativ zueinander verschieben, wenn der Rahmen mit einer Kraft beaufschlagt wird, dass die Größe der räumlichen Verschiebung der Aufhängungsbereiche von der Größe der Kraft abhängt, dass die räumliche Verschiebung der Aufhängungsbereiche eine Verstimmung einer Resonanzfrequenz mindestens einer Schwingungsmode der Schwingstruktur bewirkt und dass die Größe der Verstimmung von der Größe der räumlichen Verschiebung der Aufhängungsbereiche abhängt, erfindungsgemäß vorgesehen, dass mindestens ein Leitmittel vorgesehen ist, das sich entlang von zumindest zwei Armen erstreckt, um einen Stromfluss in Form von bewegten Ladungsträgern zumindest zwischen zwei Aufhängungsbereichen zu ermöglichen, wobei das mindestens eine Leitmittel mit einer Wechselspannung beaufschlagbar ist, um, insbesondere in einem unbelasteten Zustand des Kraftsensors, unter Ausnutzung der Lorentz-Kraft die mindestens eine Schwingungsmode der Schwingstruktur mit der Resonanzfrequenz anzuregen, wenn sich die Schwingstruktur in einem Magnetfeld befindet, dass das System weiters Auslesemittel zur Bestimmung der Resonanzfrequenz umfasst, dass eine Steuereinheit vorgesehen ist, mit der das mindestens eine Leitmittel mit Wechselspannung beaufschlagbar ist, um die Schwingstruktur zum Schwingen anzuregen, und wobei die Steuereinheit mit den Auslesemitteln zur Bestimmung der Resonanzfrequenz verbunden ist, dass die Steuereinheit zur Beaufschlagung des mindestens einen Leitmittels mit mindestens einem Puls von Wechselspannungen ausgelegt ist, um die Schwingstruktur zum Schwingen anzuregen, wobei der mindestens eine Puls eine Bandbreite von Frequenzen aufweist, welche Bandbreite die Resonanzfrequenz mindestens einer Schwingungsmode der Schwingstruktur, vorzugsweise in einem unbelasteten Zustand des Kraftsensors, umfasst, und dass das System Mittel zur Erzeugung des Magnetfelds umfasst.

D.h. jeder Arm weist ein Ende bzw. einen Endbereich auf, mit dem er an einem der Aufhängungsbereiche fixiert ist.

Weiters weist jeder Arm einen Abschnitt auf, der zumindest zu einem Abschnitt eines anderen Arms quer verläuft. Vorzugsweise verläuft jeder Arm dabei zumindest abschnittsweise geradlinig, wobei ein zumindest abschnittsweise gekrümmter Verlauf jedoch auch denkbar ist.

Die Erstreckung des Leitmittels entlang der zumindest zwei Arme ist vorzugsweise als durchgehend zu verstehen, um den Stromfluss entlang dieser Arme zu ermöglichen. Aufgrund der Kopplung des mindestens einen Leitmittels mit den Armen bzw. der Schwingstruktur kann auch auf die Schwingstruktur die Lorentz-Kraft wirken, wenn sich die Schwingstruktur bzw. der Kraftsensor im Magnetfeld befindet. Wird nun das mindestens eine Leitmittel mit einer Wechselspannung beaufschlagt und befindet sich die Schwingstruktur bzw. deren Arme in einem Magnetfeld, so wird aufgrund der sich ergebenden oszillierenden Lorentz-Kraft eine Schwingung der Schwingstruktur angeregt. Dabei kann, insbesondere bei einem zeitlich statischen oder sich nur vergleichsweise langsam ändernden Magnetfeld, eine besonders effektive Anregung erfolgen, indem die Frequenz des Wechselstroms einer Resonanzfrequenz der Schwingstruktur bzw. einer Schwingungsmode der Schwingstruktur entspricht.

Eine herstellungstechnisch vorteilhafte Ausführungsform des Kraftsensors ergibt sich, indem als das mindestens eine Leitmittel eine Leiterbahn, z.B. aus Gold der Platin, vorgesehen ist. Die Leiterbahn verläuft entsprechend zumindest abschnittsweise entlang der Längsrichtung eines Arms und zumindest abschnittsweise entlang der Längsrichtung eines anderen Arms.

Um einen Schutz des mindestens einen Leitmittels gegen äußere Einflüsse sicherzustellen, kann es auch vorgesehen sein, dass das mindestens eine Leitmittel in die Schwingstruktur bzw. in deren Arme integriert ist. In diesem Fall kann das mindestens eine Leitmittel beispielsweise als mikromechanische Struktur aus Metall, insbesondere aus Aluminium ausgeführt sein.

Denkbar wäre es auch, die Schwingstruktur bzw. deren Arme sowie das mindestens eine Leitmittel zumindest abschnittsweise einstückig auszuführen um auszuschließen, dass das mindestens eine Leitmittel durch die Schwingungen der Schwingstruktur mechanisch beschädigt oder gar zerstört wird. D.h. in diesem Fall ist die Schwingstruktur bzw. sind deren Arme zumindest abschnittsweise selbst elektrisch leitend.

Zur räumlichen Verschiebung der Aufhängungsbereiche ist zu bemerken, dass es z.B. denkbar ist, dass die einwirkende Kraft bzw. die einwirkenden Kräfte so orientiert ist bzw. sind, dass zwei Aufhängungsbereiche denselben Abstand zu einander beibehalten und zu anderen Aufhängungsbereichen nicht.

Eine Verstimmung der Resonanzfrequenz wird insbesondere gegenüber einem unbelasteten Zustand, wo also keinerlei Kraft auf den Kraftsensor einwirkt, erzielt. Darüberhinaus ergibt sich eine Verstimmung der Resonanzfrequenz aber natürlich auch gegenüber einem zuvor vorhandenen Zustand, wo bereits eine (zumindest etwas andere) Krafteinwirkung vorgeherrscht hat und eine gegenüber dem unbelasteten Zustand andere Resonanzfrequenz vorgelegen ist. Mit anderen Worten hat auch eine Änderung einer Krafteinwirkung eine Änderung bzw. Verstimmung der Resonanzfrequenz zur Folge.

Es sei bemerkt, dass grundsätzlich unterschiedliche Schwingungsmoden angeregt werden können. Insbesondere können auch gezielt Schwingungsmoden angeregt werden, deren Resonanzfrequenz speziell sensitiv auf Verzerrungen bzw. Verschiebungen nur in einer bestimmten Richtung sind, womit eine richtungsaufgelöste Kraftmessung erfolgen kann. Bei Anregbarkeit von solchen Schwingungsmoden für zwei linear unabhängige Richtungen kann eine zweidimensionale Auflösung der Kraft erfolgen, bei Anregbarkeit von solchen Schwingungsmoden für drei linear unabhängige Richtungen eine dreidimensionale Auflösung. D.h. es kann ein multiaxialer Kraftsensor realisiert werden.

Weiters sei bemerkt, dass sich die gemessene Kraft auch aus einem auf den Rahmen wirkenden Drehmoment ergeben kann, welches zu einer Torsion des Rahmens und entsprechenden Verschiebungen der Aufhängungsbereiche führen kann. Entsprechend kann der erfindungsgemäße Kraftsensor also grundsätzlich auch zur Messung von Drehmomenten bzw. Torsionen verwendet werden.

Schließlich sei bemerkt, dass im Falle von mehreren Leitmitteln in Form von Leiterbahnen nicht zwangsweise alle Leiterbahnen gleichzeitig für die Anregung von Schwingungen verwendet bzw. gleichzeitig mit Wechselspannung beaufschlagt werden müssen. Beispielsweise kann eine der Leiterbahnen zur Temperaturmessung verwendet werden, indem diese Leiterbahn nicht mit Wechselspannung beaufschlagt wird, sondern der elektrische Widerstand dieser Leiterbahn gemessen wird. Zusätzlich oder alternativ können für die Temperaturmessung aber auch eine oder mehrere zusätzliche Leiterbahnen, insbesondere aus Platin, vorgesehen sein, deren elektrischer Widerstand zur Bestimmung der Temperatur gemessen wird. Diese zusätzlichen Leiterbahnen können dabei zumindest abschnittsweise über die Schwingstruktur, insbesondere zumindest abschnittsweise über zumindest einen der Arme der Schwingstruktur, verlaufen und/oder in zumindest einem der Aufhängungsbereiche.

Hinsichtlich der Montage des Kraftsensors des erfindungsgemäßen Systems an einem Objekt, das zu bestimmenden Krafteinwirkungen ausgesetzt ist, ist festzuhalten, dass unterschiedlichste Befestigungsmöglichkeiten existieren, die an dieser Stelle nicht abschließend aufgezählt werden können. Typischerweise ist der Kraftsensor dabei fix mit dem Objekt verbunden und, wenn keine Krafteinwirkung vorliegt, eben angeordnet. Beispielsweise kann der Kraftsensor bei der Überwachung eines spezifischen Bauteils in die Oberfläche des Bauteils, d.h. in eine dafür vorgesehene Ausnehmung des Bauteils, eingebracht und dann vergossen werden (natürlich ohne dabei die Schwingstruktur zu verkleben). Ein weiteres, spezielleres Anwendungsbeispiel wäre der Einsatz des Kraftsensors als Ersatz und/oder Erweiterung einer Kraftmessdose, wo die Kraft von außen aufgebracht wird. Hierbei wäre es auch denkbar, den Kraftsensor nur einseitig (aufgestellt) zu montieren.

Um eine gegenüber äußeren Einflüssen besonders stabile Schwingung der Schwingstruktur zu ermöglichen, ist es bei einer bevorzugten Ausführungsform des erfindungsgemäßen Systems vorgesehen, dass die Aufhängungsbereiche im Bereich von Ecken des Rahmens angeordnet sind.

Um eine herstellungstechnisch einfache Lösung zu ermöglichen, ist es bei einer bevorzugten Ausführungsform des erfindungsgemäßen Systems vorgesehen, dass vier Ecken des Rahmens vorgesehen sind, die in einer Ebene des Rahmens angeordnet sind und bevorzugt ein Rechteck, besonders bevorzugt ein Quadrat, in der Ebene ausbilden.

Typischerweise ist die Erstreckung des Rahmens in einer normal auf die Ebene des Rahmens stehenden Normalrichtung deutlich geringer als in der Ebene. Beispielsweise kann der Rahmen in der Ebene von 1 mm * 1 mm bis 15 mm * 15 mm groß sein und in der Normalrichtung z.B. von 100 µm bis 500 µm, vorzugsweise 250 µm. Die Schwingstruktur kann in Normalrichtung eine nochmals reduzierte Größe aufweisen, z.B. von 10 µm bis 50 µm, vorzugsweise 20 µm.

Um die Sensitivität des Kraftsensors zu besonders kleinen Kräften hin zu erweitern, ist es bei einer bevorzugten Ausführungsform des erfindungsgemäßen Systems vorgesehen, dass der Rahmen mindestens einen mäanderförmigen Abschnitt aufweist, der vorzugsweise zwischen zumindest zwei Aufhängungsbereichen angeordnet ist. Die Mäanderstruktur bewirkt dabei - ähnlich einer Spiralfeder - eine elastische Verformbarkeit des entsprechenden Abschnitts des Rahmens entlang zumindest einer Richtung bei verringerter Krafteinwirkung im Vergleich zur notwendigen Krafteinwirkung für dieselbe Verformung ohne Mäanderstruktur.

D.h. es wird eine Verformbarkeit des Rahmens schon bei sehr kleinen Kräften ermöglicht. Vorzugsweise sind dabei die zumindest zwei Aufhängungsbereiche durch einen Abschnitt des Rahmens miteinander verbunden, der den mäanderförmigen Abschnitt enthält.

Vorzugsweise weist jede Seite des Rahmens einen solchen mäanderförmigen Abschnitt auf und/oder ist entlang des Umfangs des Rahmens jeweils zwischen zwei aufeinanderfolgenden Aufhängungsabschnitten ein mäanderförmiger Abschnitt vorgesehen um eine erhöhte Kraftempfindlichkeit in zumindest zwei Dimensionen, d.h. für Kräfte in sämtlichen Richtungen innerhalb der Ebene des Rahmens, zu erzielen.

Umgekehrt kann auch bewusst kein mäanderförmiger Abschnitt im Rahmen vorgesehen sein, um analog zum oben Gesagten gezielt den Messbereich zu höheren Kräften zu verschieben.

Um zu gewährleisten, dass die Schwingstruktur Schwingungsmoden in unterschiedlichsten Richtungen aufweist, die in weiterer Folge angeregt werden können, ist es bei einer bevorzugten Ausführungsform des erfindungsgemäßen Systems vorgesehen, dass die Anzahl der Arme ein ganzzahliges Vielfaches von vier, vorzugsweise genau vier, ist. Letztere Anzahl stellt gewissermaßen das Optimum dar zwischen den möglichen anzuregenden Schwingungsmoden, einer exakten Aufspaltung der zu messenden Belastung in x- und γ-Richtung (bzw. in zwei zueinander rechtwinkeligen Richtungen, insbesondere in der Ebene des Rahmens) sowie den auftretenden Momenten zueinander. Zudem wird bei mehr als vier Armen das System wieder komplizierter in Hinblick auf die möglichen Schwingungen sowie die Temperaturabhängigkeit.

Bei einer bevorzugten Ausführungsform des erfindungsgemäßen Systems ist vorgesehen, dass die Schwingstruktur ein Kopplungselement aufweist, durch das die Arme miteinander mechanisch gekoppelt sind, wobei jeder Arm vorzugsweise mit einem Ende am Kopplungselement fixiert ist. Durch geeignete Wahl bzw. strukturelle Gestaltung des Kopplungselements können die Schwingungsmoden der Schwingstruktur gezielt gestaltet werden, um z.B. ein besonders stabiles Schwingungsverhalten, insbesondere in bevorzugten Richtungen, zu erzielen.

Im einfachsten Fall könnte das Kopplungselement auch einfach im Wesentlichen punktförmig sein, wenn sich also die Arme in diesem Punkt treffen und insbesondere von diesem Punkt sternförmig abstehen. Bei vier geradlinigen Armen ergibt sich dann eine einfache Kreuz- oder X-Form.

Bei einer bevorzugten Ausführungsform des erfindungsgemäßen Systems ist vorgesehen, dass das Kopplungselement eine Fläche umrandet, die vorzugsweise in einer Ebene des Rahmens liegt. Es zeigt sich, dass durch diese Gestaltung sehr stabile Schwingungsmoden erzielt werden können.

Das Kopplungselement muss dabei nicht eckig bzw. vieleckig sein, sondern kann auch rund oder zumindest abschnittsweise rund sein.

Bei einer herstellungstechnisch besonders einfachen Ausführungsform des erfindungsgemäßen Systems ist vorgesehen, dass das Kopplungselement vieleckig ist, vorzugsweise viereckig, bevorzugt rechteckig, besonders bevorzugt quadratisch.

Bei einer besonders bevorzugten Ausführungsform des erfindungsgemäßen Systems ist vorgesehen, dass jeder Arm im Bereich eines Eckpunkts des Kopplungselements an diesem fixiert ist.

Vorzugsweise ist dabei jeder Arm mit einem Ende am Kopplungselement fixiert.

Es zeigt sich, dass diese Anordnung besonders stabile Schwingungsmoden garantiert, die insbesondere Normalmoden ausbilden können.

Um ein Wölben der Arme und - damit eine Verstimmung der Resonanzfrequenz - aufgrund einer thermisch bedingten Ausdehnung oder Kontraktion zu unterbinden, ist es bei einer bevorzugten Ausführungsform des erfindungsgemäßen Systems vorgesehen, dass die Arme jeweils mittels einer zumindest abschnittsweise mäanderförmigen Temperaturausgleichsstruktur am jeweiligen Aufhängungsbereich fixiert sind. Die jeweilige Temperaturausgleichsstruktur kann dabei durch einen Kragarm ausgebildet sein. Die derart ausgeführten, am Rahmen fixierten Temperaturausgleichsstrukturen unterliegen selbst einer thermischen Ausdehnung bzw. Kontraktion und sind so zu den Armen angeordnet, dass die thermische Ausdehnung der Arme kompensiert wird, wodurch ein Wölben verhindert wird.

Vorzugsweise sind die Temperaturausgleichsstrukturen jeweils einstückig mit dem zugehörigen Arm ausgeführt.

Um Kraftsensoren mit einer wohldefinierten Struktur und wohldefinierten mechanischen Eigenschaften des Rahmens sowie der Schwingstruktur herstellen zu können, ist es bei einer bevorzugten Ausführungsform des erfindungsgemäßen Systems vorgesehen, dass der Rahmen und die Schwingstruktur einstückig aus, vorzugsweise einkristallinem, Silizium gefertigt sind. Dies ermöglicht beispielsweise die Herstellung auf Basis eines Silizium-Wafers in einem sogenannten, an sich bekannten Silicon-On-Insulator (SOI)-Verfahren.

Um die (Resonanz-)Schwingungen der Schwingstruktur, insbesondere die Frequenzen der (Resonanz-)Schwingungen, zu bestimmen, können an sich bekannte Auslesemittel verwendet werden. Entsprechend ist es bei einer bevorzugten Ausführungsform des erfindungsgemäßen Systems vorgesehen, dass die Auslesemittel mindestens einen optischen Sensor und/oder mindestens einen kapazitiven Sensor umfassen. Derlei Sensoren sind, wie gesagt, an sich bekannt.

Kapazitive Sensoren sind insbesondere zur Messung von Schwingungsmoden, deren Schwingungsebene bzw. Amplitude normal zur Ebene des Rahmens steht, geeignet, wobei die kapazitiven Sensoren dann über und/oder unter der Ebene des Rahmens angeordnet sein können. Mit optischen Sensoren können insbesondere Schwingungsmoden, deren Schwingungsebene bzw. Amplitude in der Ebene des Rahmens liegt, gemessen werden. Z.B. kann eine optische Messung in Transmissionsgeometrie (normal auf die Ebene des Rahmens) erfolgen und kann so die periodische Änderung der Anordnung bzw. Geometrie der Schwingstruktur in der Ebene des Rahmens detektiert werden. Wie gesagt, ist es beim erfindungsgemäßen System vorgesehen, dass eine Steuereinheit vorgesehen ist, mit der das mindestens eine Leitmittel mit Wechselspannung beaufschlagbar ist, um die Schwingstruktur zum Schwingen anzuregen, und wobei die Steuereinheit mit den Auslesemitteln zur Bestimmung der Resonanzfrequenz verbunden ist, wobei vorzugsweise mindestens zwei Leitmittel vorgesehen sind und die Steuereinheit zur Beaufschlagung der mindestens zwei Leitmittel mit gegenphasigen Wechselspannungen ausgelegt ist. Die Steuereinheit kann somit - insbesondere nacheinander - Wechselspannungen unterschiedlicher Frequenzen zur Beaufschlagung verwenden und kann auf Basis der Detektion der jeweils resultierenden Schwingung der Schwingstruktur mindestens eine Resonanzfrequenz bestimmen, wobei die Wahl der nächsten Frequenz vom aktuellen Detektionsergebnis abhängig gemacht werden kann.

Die Beaufschlagung mit gegenphasiger Wechselspannung kann messtechnische Vorteile haben, insbesondere wenn neben der Frequenz auch die Amplitude bestimmt werden soll, da sich hierdurch sehr leicht und ohne zusätzlichen Rechenaufwand ein Differenzsignal der Auslesemittel, mit deren Hilfe die Amplituden der Schwingungsmoden gemessen werden, generieren lässt. Beispielsweise wäre die Realisierung eines Differentialkondensators bei einer kapazitiven Auslese der Amplituden möglich.

Um besonders rasch zumindest eine Resonanzfrequenz bestimmen zu können, ist es, wie gesagt, beim erfindungsgemäßen System vorgesehen, dass die Steuereinheit zur Beaufschlagung des mindestens einen Leitmittels mit mindestens einem Puls von Wechselspannungen ausgelegt ist, um die Schwingstruktur zum Schwingen anzuregen, wobei der mindestens eine Puls eine Bandbreite von Frequenzen aufweist, welche Bandbreite die Resonanzfrequenz mindestens einer Schwingungsmode der Schwingstruktur, vorzugsweise in einem unbelasteten Zustand des Kraftsensors, umfasst. Das oben geschilderte, sequentielle Beaufschlagen mit Wechselspannungen unterschiedlicher Frequenzen, ist demgegenüber deutlich zeitaufwändiger. Insbesondere ausgehend von der Kenntnis mindestens einer Resonanzfrequenz im unbelasteten Zustand (d.h. ohne Krafteinwirkung auf den Sensor) kann ein geeignetes bzw. hinreichend großes Frequenzband gewählt werden, um die aufgrund der Krafteinwirkung verstimmte Resonanzfrequenz zu ermitteln.

In der Praxis wäre z.B. die Verwendung eines Scanners, insbesondere Handscanners, denkbar, der in die Nähe des Kraftsensors gebracht wird und die Beaufschlagung des mindestens einen Leitmittels mit dem mindestens einen Puls (insbesondere induktiv) bewirkt. In den Handscanner können darüber hinaus die Auslesemittel sowie die Steuereinheit integriert sein. Entsprechend kann der Kraftsensor an einem Objekt montiert bleiben, bei welchem man mögliche Krafteinwirkungen auf dieses nur von Zeit zu Zeit (und nicht laufend) bestimmen möchte. Bei einem solchen Objekt kann es sich z.B. um ein Bauwerk oder eine von einem Menschen getragene Prothese handeln.

Grundsätzlich ist es dabei möglich, auch mehrere Resonanzfrequenzen für unterschiedliche Moden mit einem Puls anzuregen.

Um gezielt unterschiedliche Resonanzfrequenzen anzuregen, z.B. um Richtungsabhängigkeiten der entsprechenden Schwingungsmoden für eine richtungsaufgelöste Kraftmessung messtechnisch bequem auszunutzen, ist es bei einer besonders bevorzugten Ausführungsform des erfindungsgemäßen Systems vorgesehen, dass die Steuereinheit zur Beaufschlagung des mindestens einen Leitmittels mit mehreren Pulsen von Wechselspannungen nacheinander ausgelegt ist, wobei die unterschiedlichen Pulse Resonanzfrequenzen unterschiedlicher Schwingungsmoden der Schwingstruktur, vorzugsweise im unbelasteten Zustand des Kraftsensors, umfassen. D.h. ein erster Puls umfasst zumindest eine erste resonante Schwingungsmode der Schwingstruktur, vorzugsweise im unbelasteten Zustand; ein weiterer Puls umfasst zumindest eine weitere resonante Schwingungsmode der Schwingstruktur, vorzugsweise im unbelasteten Zustand, wobei die erste Schwingungsmode und die weitere Schwingungsmode unterschiedlich sind.

Beim erfindungsgemäßen System ist, wie gesagt, vorgesehen, dass das System Mittel zur Erzeugung des Magnetfelds umfasst, vorzugsweise mindestens einen Permanentmagnet und/oder mindestens eine Helmholtz-Spule. Auf diese Weise kann sichergestellt werden, dass stets ein zumindest einigermaßen definiertes Magnetfeld für die Kraftmessungen vorliegt, womit sich gewünschte Schwingungsmoden der Schwingstruktur sehr genau einstellen bzw. detektieren lassen, um sehr präzise Kraftmessungen zu ermöglichen.

Besonders exakt muss das Magnetfeld dabei nicht definiert sein, da es für die Anregung einer gewünschten Schwingungsmode der Schwingstruktur genügt, die entsprechende Resonanzfrequenz durch geeignete Wahl der Frequenz der Wechselspannung zu treffen. Die Mittel zur Erzeugung des Magnetfelds müssen daher auch nicht fix bzw. permanent am Kraftsensor des erfindungsgemäßen Systems befestigt bzw. angeordnet sein. Stattdessen können die Mittel zur Erzeugung des Magnetfelds, insbesondere ein Permanentmagnet, im weiter oben bereits erwähnten Scanner, insbesondere Handscanner, angeordnet sein. Der Scanner dient dann nicht nur zur Beaufschlagung mit Wechselspannung, sondern stellt gleichzeitig auch das für die Schwingungsanregung mittels Lorentz-Kraft notwendige Magnetfeld zur Verfügung.

Auf die geschilderte Weise kann auch die Anregung von so genannten In-Plane-Schwingungen leicht gewährleistet werden, also von Schwingungsmoden, deren Schwingungsebene bzw. Amplitude in der Ebene des Rahmens liegt. Hierdurch lassen sich Torsionen des Rahmens bzw. an diesem anliegende Drehmomente besonders gut messen. Entsprechend ist es bei einer besonders bevorzugten Ausführungsform des erfindungsgemäßen Systems vorgesehen, dass die Steuereinheit zur Anregung von Schwingungen der Schwingstruktur in einer Ebene des Rahmens ausgelegt ist.

Wie bereits festgehalten, eignet sich der Kraftsensor des erfindungsgemäßen Systems insbesondere für Anwendungen in der Biologie oder Medizin, z.B. an medizinischen Instrumenten, sowie in der Prothetik. Insbesondere der Komfort einer Prothese und die Vermeidung von Schäden am Körper hängen wesentlich von einer optimalen Kraftverteilung ab. Es ist denkbar, Prothesen und/oder Implantate mit Kraftsensoren erfindungsgemäßer Systeme auszustatten, um bei Verwendung der Prothesen bzw. Implantate Feedback über den jeweiligen Belastungszustand zu erhalten.

Entsprechend ist erfindungsgemäß eine Prothese umfassend ein erfindungsgemäßes System vorgesehen.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

### Dabei zeigt:

- Fig. 1: einen Kraftsensor in Aufsicht
- Fig. 2: eine vergrößerte Ansicht des Details A aus Fig. 1
- Fig. 3: ein schematisches Blockschaltbild eines erfindungsgemäßen Systems mit dem Kraftsensor der Fig. 1

### WEGE ZUR AUSFÜHRUNG DER ERFINDUNG

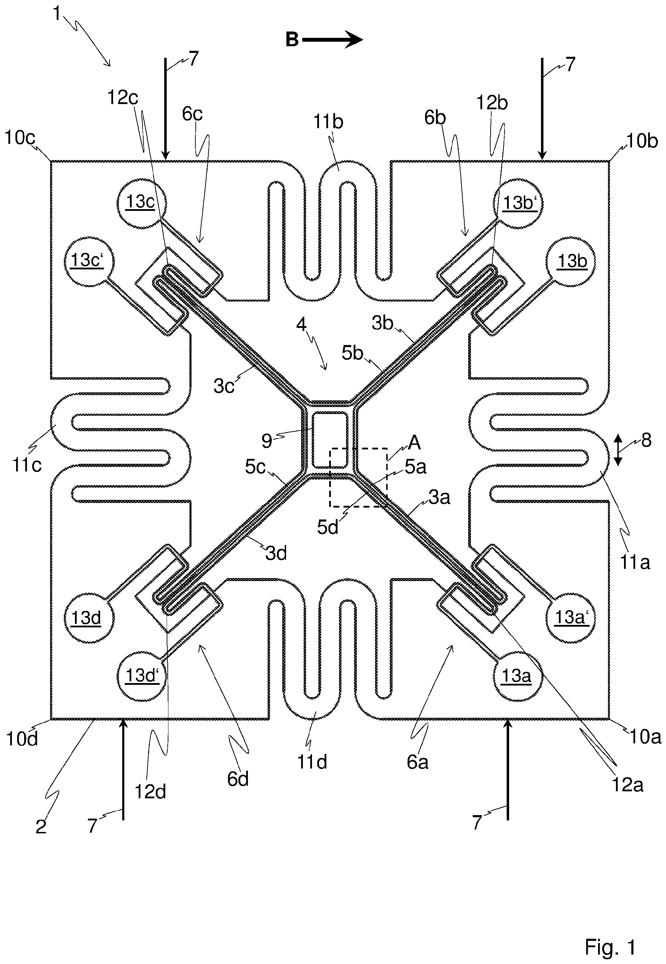

Fig. 1 zeit einen Kraftsensor 1 eines erfindungsgemäßen Systems 14 in Aufsicht, der zur Messung sehr kleiner Kräfte von kleiner gleich 1 µN, vorzugsweise von kleiner gleich 1nN, geeignet ist. Der Kraftsensor 1 weist einen Rahmen 2 mit vier Ecken 10a, 10b, 10c, 10d auf, die in einer Ebene des Rahmens 2 liegen, wobei in Fig. 1 die Ebene des Rahmens 2 mit der Zeicheneben zusammenfällt. Im dargestellten Ausführungsbeispiel markieren die Ecken 10a-d Eckpunkte eines Quadrats mit einer Seitenlänge von typischerweise 2 mm. Es sei jedoch betont, dass prinzipiell auch andere Formen, insbesondere eine Rechteckform, des Rahmens 2 möglich wären.

Der Kraftsensor 1 weist weiters eine Schwingstruktur 4 auf, die im Rahmen 2 frei schwingen kann. Hierzu weist die Schwingstruktur 4 im dargestellten Ausführungsbeispiel vier Arme 3a, 3b, 3c und 3d auf, mit denen die Schwingstruktur 4 am Rahmen 2 befestigt ist, wobei jeder der Arme 3a-d mit einem Ende in einem zugehörigen Aufhängungsbereich 6a, 6b, 6c, 6d des Rahmens 2 fixiert ist. Die Aufhängungsbereiche 6a-d sind jeweils im Bereich einer der Ecken 10a-d des Rahmens 2 angeordnet.

Die Arme 3a-d weisen weiters jeweils ein Ende auf, das an einem Kopplungselement 9 der Schwingstruktur 4 fixiert ist. Das Kopplungselement 9 wiederum ist im dargestellten Ausführungsbeispiel mittig innerhalb des Rahmens 2 angeordnet und im Wesentlichen rechteckförmig ausgebildet, wobei jeder der Arme 3a-d im Bereich eines Eckpunkts des Kopplungselements 9 in dieses mündet.

Im dargestellten Ausführungsbeispiel erstreckt sich jeder der Arme 3a-d mit einem im Wesentlichen geradlinigen Abschnitt zwischen dem zugehörigen Aufhängungsbereich 6a-d und dem zugehörigen Eckpunkt des Kopplungselements 9. Hierdurch ergibt sich eine Anordnung der Arme 3a-d, die einer X-Form ähnelt, sodass jeder der Arme 3a-d zumindest abschnittsweise quer zu zwei anderen der Arme 3a-d verläuft (die besagten geradlinigen Abschnitte der Arme 3a und 3c verlaufen parallel zueinander und quer zu den entsprechenden geradlinigen Abschnitten der Arme 3b und 3d und vice versa).

Auf den Armen 3a-d sind im dargestellten Ausführungsbeispiel Leitmittel in Form von Leiterbahnen 5a, 5b, 5c, 5d, vorzugsweise aus Platin, angeordnet. Jede der Leiterbahnen 5a-d erstreckt sich entlang von jeweils zwei der Arme 3a-d, um einen Stromfluss in Form von bewegten Ladungsträgern, insbesondere Elektronen, zwischen den Aufhängungsbereichen 6a-d der jeweiligen zwei Arme 3a-d zu ermöglichen. Konkret erstreckt sich im dargestellten Ausführungsbeispiel die Leiterbahn 5a entlang der Arme 3a und 3b zwischen den Aufhängungsbereichen 6a und 6b, die Leiterbahn 5b entlang der Arme 3b und 3c zwischen den Aufhängungsbereichen 6b und 6c, die Leiterbahn 5c entlang der Arme 3c und 3d zwischen den Aufhängungsbereichen 6c und 6d und die Leiterbahn 5d entlang der Arme 3d und 3a zwischen den Aufhängungsbereichen 6d und 6a.

Um die Leiterbahnen 5a-d einfach mit einer Wechselspannung beaufschlagen zu können, sind in den Aufhängungsbereichen 6a-d kreisförmige Kontaktstellen 13a, 13a', 13b, 13b', 13c, 13c', 13d, 13d' vorgesehen. Diese sind so groß ausgeführt, dass eine Kontaktierung mit einer Wechselspannungsquelle bzw. mit Leitern einer solchen (nicht dargestellt) zur Wechselspannungsbeaufschlagung von zumindest einer der Leiterbahnen 5a-d bequem möglich ist. Konkret verläuft die Leiterbahn 5a zwischen den Kontaktstellen 13a' und 13b, die Leiterbahn 5b zwischen den Kontaktstellen 13b' und 13c, die Leiterbahn 5c zwischen den Kontaktstellen 13c' und 13d und die Leiterbahn 5d zwischen den Kontaktstellen 13d' und 13a.

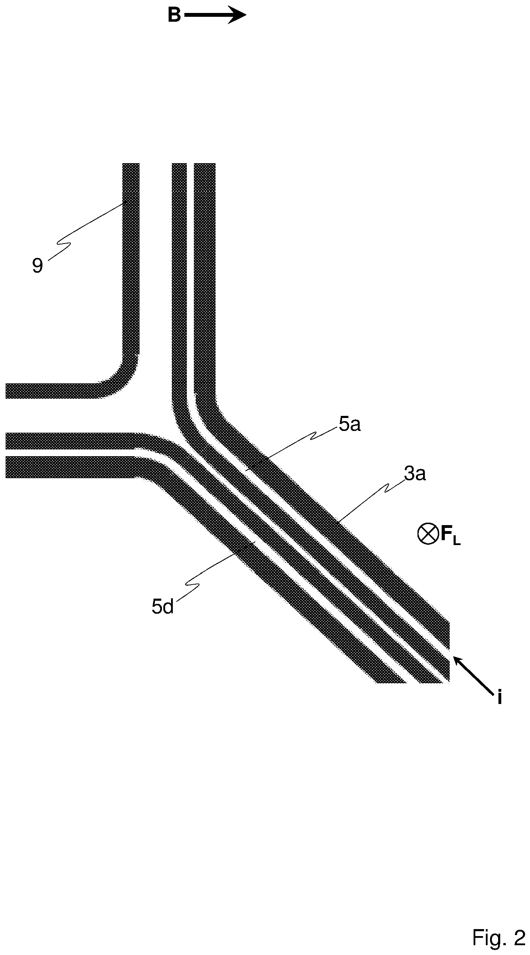

Zur besseren Verdeutlichung der Leiterbahnen 5a-d zeigt Fig. 2 eine vergrößerte Ansicht des Details A aus Fig. 1, in welcher die Leiterbahnen 5a und 5d klar erkennbar sind. Weiters ist in Fig. 2 ein durch die Leiterbahn 5a fließender Wechselstrom i mit einem Pfeil symbolisiert. Wenn der Kraftsensor 1 in diesem Fall in einem Magnetfeld mit einer Flussdichte B angeordnet ist, die im dargestellten Ausführungsbeispiel im gesamten Bereich des Kraftsensors 1 als gleichförmig mit einem in den Fig. 1 und Fig. 2 von links nach rechts weisenden Vektor angenommen ist, so resultiert eine normal auf die Zeichenebene stehende und in diese weisende Lorentz-Kraft F_{L}, die in Fig. 2 schematisch eingezeichnet ist. Wechselt der Wechselstrom sein Vorzeichen bzw. seine Richtung, so weist auch die Lorentz-Kraft F_{L} in die entgegengesetzte Richtung (also aus der Zeichenebene heraus). Die Lorentz-Kraft wirkt auf die Ladungsträger in der Leiterbahn 5a und damit auf die Leiterbahn 5a selbst bzw. auf die Arme 3a, 3b und regt durch den ständigen Vorzeichenwechsel die Arme 3a, 3b und damit die gesamte Schwingstruktur 4 zum Schwingen im Rahmen 2 an. Eine besonders effiziente Anregung erfolgt dann, wenn der Wechselstrom i eine Resonanzfrequenz aufweist, also die Frequenz einer resonanten Schwingungsmode der Schwingstruktur 4.

Es sei bemerkt, dass nicht alle Leiterbahnen 5a-d zwangsweise gleichzeitig für die Anregung von Schwingungen der Schwingstruktur 4 verwendet bzw. gleichzeitig mit Wechselspannung beaufschlagt werden müssen. In Fig. 2 könnte z.B. die Leiterbahn 5d bewusst nicht mit Wechselspannung beaufschlagt werden, sodass durch die Leiterbahn 5d kein Wechselstrom i fließt (sondern in Fig. 2 nur durch die Leiterbahn 5a). Die Leiterbahn 5d kann dann beispielsweise zur Temperaturmessung verwendet werden, indem der elektrischer Widerstand der Leiterbahn 5d gemessen wird, wobei bei dieser Messung die Kontaktstellen 13d' und 13a zur Kontaktierung verwendet werden können.

Die Resonanzfrequenz der Schwingstruktur 4 hängt insbesondere von der relativen Position der Aufhängungsbereiche 6a-d zueinander ab. Eine Änderung bewirkt ein Verspannen der Schwingstruktur 4, insbesondere der Arme 3a-d, was eine entsprechende Änderung der Resonanzfrequenz zur Folge hat. Um diesen Effekt zur Kraftmessung optimal ausnutzen zu können, ist der Kraftsensor 1 so ausgelegt, dass sich die Aufhängungsbereiche 6a-d zumindest teilweise räumlich relativ zueinander verschieben, wenn der Rahmen 2 mit einer Kraft 7 beaufschlagt wird, dass die Größe der räumlichen Verschiebung 8 der Aufhängungsbereiche 6a-d von der Größe der Kraft 7 abhängt, dass die räumliche Verschiebung 8 der Aufhängungsbereiche 6a-d eine Verstimmung der Resonanzfrequenz bewirkt und dass die Größe der Verstimmung von der Größe der räumlichen Verschiebung 8 der Aufhängungsbereiche 6a-d abhängt.

Indem die Resonanzfrequenz der Schwingstruktur 4 in einem unbelasteten Zustand des Kraftsensors 1, also ohne Krafteinwirkung, bekannt ist oder bestimmt wird, und dann die Resonanzfrequenz im belasteten Zustand, also bei Einwirkung der Kraft 7 auf den Kraftsensor 1 bzw. den Rahmen 2, kann auf die Größe der Kraft 7 rückgerechnet werden. Ebenso ist es ausgehend von einem belasteten Zustand und Kenntnis bzw. Bestimmung der Resonanzfrequenz in diesem belasteten Zustand möglich, durch Bestimmung der Resonanzfrequenz in einem weiteren belasteten Zustand mit einer anderen Kraft 7 die entsprechende Kraftänderung (vom belasteten Zustand zum weiteren belasteten Zustand) zu ermitteln.

Besonders gut lassen sich Kräfte 7 messen, die zumindest eine Komponente innerhalb der Ebene des Rahmens 2 haben. In Fig. 1 liegt die eingezeichnete Kraft 7 vollständig in der Ebene des Rahmens 2. Dabei wird gegen den Rahmen 2 im Bereich der Aufhängungsbereiche 6b, 6c von oben nach unten gedrückt und im Bereich der Aufhängungsbereiche 6d, 6a von unten nach oben. In diesem Beispiel werden die Aufhängungsbereiche 6b, 6c einerseits und die Aufhängungsbereiche 6d, 6a andererseits um die Verschiebung 8 aufeinander zu verschoben. Die relative Position der Aufhängungsbereiche 6d und 6a zueinander ändert sich hierbei nicht, ebenso wie die relative Position der Aufhängungsbereiche 6b und 6c zueinander.

Damit auch bei sehr kleinen Kräften 7 die Verschiebung 8 hinreichend groß ist, weist der Rahmen 2 mäanderförmige Abschnitte 11a, 11b, 11c, 11d auf, die jeweils zwischen zwei der Aufhängungsbereiche 6a-d angeordnet sind und eine elastische Verformbarkeit des Rahmens 2 in einer Richtung parallel zu einer Verbindungslinie zwischen diesen zwei der Aufhängungsbereiche 6a-d begünstigt. Im dargestellten Ausführungsbeispiel werden durch die Kraft 7 die mäanderförmigen Abschnitte 11a und 11c verformt, was zur Verschiebung 8 führt.

Um zu verhindern, dass es aufgrund von Temperaturänderungen zu thermisch bedingten Wölbungen bzw. Verspannungen durch Ausdehnung oder Kontraktion der Arme 3a-d kommt, die eine Änderung der Resonanzfrequenz der Schwingstruktur 4 nach sich ziehen würden, sind im dargestellten Ausführungsbeispiel Temperaturausgleichsstrukturen 12a, 12b, 12c, 12d vorgesehen. Jeder der Arme 3a-d ist mittels einer der Temperaturausgleichsstrukturen 12a-d am Rahmen befestigt. Die Temperaturausgleichsstrukturen 12a-d sind mäanderförmig ausgeführt. Eine Temperaturänderung hat eine Ausdehnung bzw. Kontraktion der Temperaturausgleichsstrukturen 12a-d zur Folge, die die thermische Ausdehnung bzw. Kontraktion des zugehörigen Arms 3a-d genau kompensieren, sodass es zu keiner Verstimmung kommt.

Hierbei verlaufen die Leiterbahnen 5a-d entlang der Temperaturausgleichsstrukturen 12a-d, also ebenfalls zumindest abschnittsweise mäanderförmig.

Rahmen 2 und Schwingstruktur 4 des Kraftsensors 1 sind im dargestellten Ausführungsbeispiel mittels der an sich bekannten Silicon-On-Insulator-Technologie hergestellt. Bei dieser Herstellungsmethode kann der Rahmen 2 gemeinsam mit der Schwingstruktur 4 einstückig in einem Herstellungsrahmen erzeugt werden, wobei nach der Fertigstellung der Rahmen 2 bzw. der Kraftsensor 1 aus dem Herstellungsrahmen an dafür vorgesehenen Sollbruchstellen herausgebrochen wird.

Um die (Resonanz-)Schwingungen der Schwingstruktur 4, insbesondere die Frequenzen der (Resonanz-)Schwingungen, zu bestimmen, können an sich bekannte Auslesemittel verwendet werden, insbesondere optische Sensoren 15 und/oder kapazitive Sensoren (nicht dargestellt). Kapazitive Sensoren sind insbesondere zur Messung von Schwingungsmoden, deren Schwingungsebene bzw. Amplitude normal zur Ebene des Rahmens 2 steht, geeignet, wobei die kapazitiven Sensoren dann über und/oder unter der Ebene angeordnet sein können. Mit optischen Sensoren 15 können insbesondere Schwingungsmoden, deren Schwingungsebene bzw. Amplitude in der Ebene des Rahmens 2 liegt, gemessen werden. Z.B. kann eine optische Messung in Transmissionsgeometrie (quer, insbesondere normal auf die Ebene des Rahmens 2; der mindestens eine optische Sensor 15 ist dann über und/oder unter der Ebene des Rahmens 2 angeordnet) erfolgen und kann so die periodische Änderung der Anordnung bzw. Geometrie der Schwingstruktur 4 in der Ebene des Rahmens 2 detektiert werden.

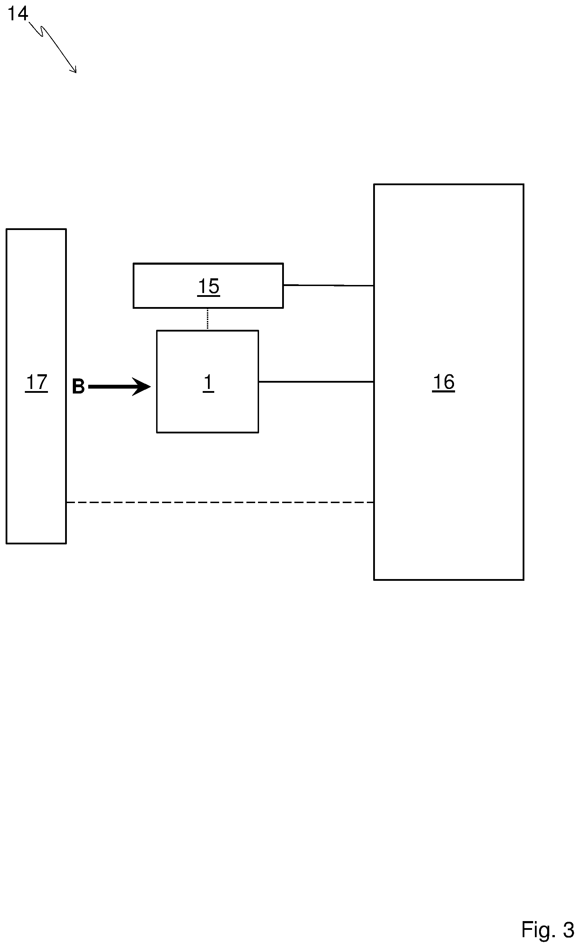

Fig. 3 zeigt eine schematische Darstellung des erfindungsgemäßen Systems 14, das den Kraftsensor 1 sowie mindestens einen optischen Sensor 15 umfasst. Die punktierte Linie zwischen dem mindestens einen optischen Sensor 15 und dem Kraftsensor 1 deutet in Fig. 3 an, dass mittels des mindestens einen optischen Sensors 15 die Schwingungen, insbesondere die Frequenz der Schwingstruktur 4 des Kraftsensors 1 detektiert werden. Der optische Sensor 15 ist dabei mit einer Steuereinheit 16 des Systems 14 verbunden, um die bzw. zumindest eine Resonanzfrequenz der Schwingstruktur 4 bestimmen zu können. Weiters ist die Steuereinheit 16 mit dem Kraftsensor 1 bzw. mit mindestens einer der Leiterbahnen 5a-d (insbesondere über die entsprechenden Kontaktstellen 13a-d') verbunden, um mindestens eine der Leiterbahnen 5a-d mit Wechselspannung beaufschlagen und die Schwingstruktur 4 zum Schwingen anregen zu können.

In der Praxis kann dies auch so realisiert sein, dass die Steuereinheit 16 eine separate Wechselspannungsquelle ansteuert, die wiederum mit dem Kraftsensor 1 bzw. mit mindestens einer der Leiterbahnen 5a-d verbunden ist. In diesem Fall handelt es sich also um eine indirekte Verbindung der Steuereinheit 16 mit dem Kraftsensor 1 bzw. wird die mindestens eine der Leiterbahnen 5a-d indirekt mittels der Steuereinheit 16 mit Wechselspannung beaufschlagt.

Die Steuereinheit 16 kann somit - insbesondere nacheinander - Wechselspannungen unterschiedlicher Frequenzen zur Beaufschlagung verwenden und kann auf Basis der Detektion der jeweils resultierenden Schwingung der Schwingstruktur 4 mindestens eine Resonanzfrequenz bestimmen, wobei die Wahl der nächsten Frequenz vom aktuellen Detektionsergebnis abhängig gemacht werden kann.

Vorzugsweise werden zur Anregung einer Schwingungsmode der Schwingstruktur 4 zwei der Leiterbahnen 5a-d mit gegenphasiger Wechselspannung mittels der Steuereinheit 16 beaufschlagt, wobei diese zwei Leiterbahnen vorzugsweise einander gegenüber liegen, z.B. die Leiterbahnen 5a und 5c.

Um besonders rasch zumindest eine Resonanzfrequenz bestimmen zu können, kann die Steuereinheit 16 zur Beaufschlagung der mindestens einen der Leiterbahnen 5a-d mit mindestens einem Puls von Wechselspannungen ausgelegt sein, um die Schwingstruktur 4 zum Schwingen anzuregen, wobei der mindestens eine Puls eine Bandbreite von Frequenzen aufweist, welche Bandbreite die Resonanzfrequenz mindestens einer Schwingungsmode der Schwingstruktur 4, vorzugsweise in einem unbelasteten Zustand des Kraftsensors 1, umfasst. Das oben geschilderte, sequentielle Beaufschlagen mit Wechselspannungen unterschiedlicher Frequenzen, ist demgegenüber deutlich zeitaufwändiger. Insbesondere ausgehend von der Kenntnis mindestens einer Resonanzfrequenz im unbelasteten Zustand (d.h. ohne Krafteinwirkung auf den Kraftsensor 1) kann ein geeignetes bzw. hinreichend großes Frequenzband gewählt werden, um die aufgrund der Krafteinwirkung verstimmte Resonanzfrequenz zu ermitteln.

Um gezielt unterschiedliche Resonanzfrequenzen anzuregen, z.B. um Richtungsabhängigkeiten der entsprechenden Schwingungsmoden für eine richtungsaufgelöste Kraftmessung messtechnisch bequem auszunutzen, kann die Steuereinheit 16 zur Beaufschlagung der mindestens einen der Leiterbahnen 5a-d mit mehreren Pulsen von Wechselspannungen nacheinander ausgelegt sein, wobei die unterschiedlichen Pulse Resonanzfrequenzen unterschiedlicher Schwingungsmoden der Schwingstruktur 4, vorzugsweise im unbelasteten Zustand des Kraftsensors 1, umfassen. D.h. ein erster Puls umfasst zumindest eine erste resonante Schwingungsmode der Schwingstruktur 4, vorzugsweise im unbelasteten Zustand; ein weiterer Puls umfasst zumindest eine weitere resonante Schwingungsmode der Schwingstruktur 4, vorzugsweise im unbelasteten Zustand, wobei die erste Schwingungsmode und die weitere Schwingungsmode unterschiedlich sind.

Um ein wohldefiniertes Magnetfeld zur Verfügung zu stellen, umfasst das System 14 Mittel 17 zur Erzeugung des Magnetfelds. Diese können insbesondere mindestens einen Permanentmagnet und/oder mindestens eine Helmholtz-Spule beinhalten. Die strichlierte Linie in Fig. 3 deutet an, dass es denkbar ist, dass die Mittel 17 von der Steuereinheit 16 angesteuert werden, um ein gewünschtes Magnetfeld einzustellen. Beispielsweise könnte eine Helmholtz-Spule von der Steuereinheit 16 angesteuert werden.

Durch die Sicherstellung eines wohldefinierten Magnetfelds lassen sich gewünschte Schwingungsmoden der Schwingstruktur 4 sehr genau einstellen, was wiederum besonders präzise Kraftmessungen ermöglicht. Insbesondere kann auf diese Weise die Anregung von so genannten In-Plane-Schwingungen gewährleistet werden, also von Schwingungsmoden, deren Schwingungsebene bzw. Amplitude in der Ebene des Rahmens liegt. Es zeigt sich, dass solche In-Plane-Schwingungen eine besonders genaue Detektion von Torsionen des Rahmens 2 ermöglichen.

### BEZUGSZEICHENLISTE

- 1: Kraftsensor
- 2: Rahmen
- 3a, 3b, 3c, 3d: Arm
- 4: Schwingstruktur
- 5a, 5b, 5c, 5d: Leiterbahn
- 6a, 6b, 6c, 6d: Aufhängungsbereich
- 7: Kraft
- 8: Räumliche Verschiebung der Aufhängungsbereiche
- 9: Kopplungselement
- 10a, 10b, 10c, 10d: Ecke des Rahmens
- 11a, 11b, 11c, 11d: Mäanderförmiger Abschnitt des Rahmens
- 12a, 12b, 12c, 12d: Temperaturausgleichsstruktur
- 13a, 13a', 13b, 13b', 13c, 13c', 13d, 13d': Kontaktstelle
- 14: System
- 15: Optischer Sensor
- 16: Steuereinheit
- 17: Mittel zur Erzeugung eines Magnetfelds
- B: Magnetische Flussdichte
- F_{L}: Lorentz-Kraft
- i: Wechselstrom

## Patentansprüche

1. System (14) umfassend einen Kraftsensor (1), der Kraftsensor (1) umfassend einen Rahmen (2) sowie eine Schwingstruktur (4), die mehrere Arme (3a-d) aufweist und im Rahmen (2) frei schwingen kann, wobei die Arme (3a-d) an Aufhängungsbereichen (6a-d) des Rahmens (2) fixiert sind und zumindest abschnittsweise quer zueinander verlaufen,
wobei der Kraftsensor (1) so ausgelegt ist, dass sich die Aufhängungsbereiche (6a-d) zumindest teilweise räumlich relativ zueinander verschieben, wenn der Rahmen (2) mit einer Kraft (7) beaufschlagt wird, dass die Größe der räumlichen Verschiebung (8) der Aufhängungsbereiche (6a-d) von der Größe der Kraft (7) abhängt, dass die räumliche Verschiebung (8) der Aufhängungsbereiche (6a-d) eine Verstimmung einer Resonanzfrequenz mindestens einer Schwingungsmode der Schwingstruktur (4) bewirkt und dass die Größe der Verstimmung von der Größe der räumlichen Verschiebung (8) der Aufhängungsbereiche (6a-d) abhängt, **dadurch gekennzeichnet, dass** mindestens ein Leitmittel (5a-d) vorgesehen ist, das sich entlang von zumindest zwei Armen (3a-b; 3b-c; 3c-d; 3d-a) erstreckt, um einen Stromfluss (i) in Form von bewegten Ladungsträgern zumindest zwischen zwei Aufhängungsbereichen (6a-b; 6b-c; 6c-d; 6d-a) zu ermöglichen, wobei das mindestens eine Leitmittel (5a-d) mit einer Wechselspannung beaufschlagbar ist, um, insbesondere in einem unbelasteten Zustand des Kraftsensors (1), unter Ausnutzung der Lorentz-Kraft (F_{L}) die mindestens eine Schwingungsmode der Schwingstruktur (4) mit der Resonanzfrequenz anzuregen, wenn sich die Schwingstruktur (4) in einem Magnetfeld (B) befindet, dass das System (14) weiters Auslesemittel zur Bestimmung der Resonanzfrequenz umfasst,
dass eine Steuereinheit (16) vorgesehen ist, mit der das mindestens eine Leitmittel (5a-d) mit Wechselspannung beaufschlagbar ist, um die Schwingstruktur (4) zum Schwingen anzuregen, und wobei die Steuereinheit (16) mit den Auslesemitteln (15) zur Bestimmung der Resonanzfrequenz verbunden ist,
dass die Steuereinheit (16) zur Beaufschlagung des mindestens einen Leitmittels (5a-d) mit mindestens einem Puls von Wechselspannungen ausgelegt ist, um die Schwingstruktur (4) zum Schwingen anzuregen, wobei der mindestens eine Puls eine Bandbreite von Frequenzen aufweist, welche Bandbreite die Resonanzfrequenz mindestens einer Schwingungsmode der Schwingstruktur (4), vorzugsweise in einem unbelasteten Zustand des Kraftsensors (1), umfasst,
und dass das System (14) Mittel (17) zur Erzeugung des Magnetfelds (B) umfasst.

2. System (14) nach Anspruch 1, **dadurch gekennzeichnet, dass** die Aufhängungsbereiche (6a-d) im Bereich von Ecken (10a-d) des Rahmens (2) angeordnet sind.

3. System (14) nach einem der Ansprüche 1 bis 2, **dadurch gekennzeichnet, dass** vier Ecken (10a-d) des Rahmens (2) vorgesehen sind, die in einer Ebene des Rahmens (2) angeordnet sind und bevorzugt ein Rechteck, besonders bevorzugt ein Quadrat, in der Ebene ausbilden.

4. System (14) nach einem der Ansprüche 1 bis 3, **dadurch gekennzeichnet, dass** der Rahmen (2) mindestens einen mäanderförmigen Abschnitt (11a-d) aufweist, der vorzugsweise zwischen zumindest zwei Aufhängungsbereichen (6a-b; 6b-c; 6c-d; 6d-a) angeordnet ist

5. System (14) nach einem der Ansprüche 1 bis 4, **dadurch gekennzeichnet, dass** die Anzahl der Arme (3a-d) ein ganzzahliges Vielfaches von vier, vorzugsweise genau vier, ist.

6. System (14) nach einem der Ansprüche 1 bis 5, **dadurch gekennzeichnet, dass** die Schwingstruktur (4) ein Kopplungselement (9) aufweist, durch das die Arme (3a-d) miteinander mechanisch gekoppelt sind, wobei jeder Arm (3a-d) vorzugsweise mit einem Ende am Kopplungselement (9) fixiert ist.

7. System (14) nach Anspruch 6, **dadurch gekennzeichnet, dass** das Kopplungselement (9) eine Fläche umrandet, die vorzugsweise in einer Ebene des Rahmens (2) liegt.

8. System (14) nach Anspruch 7, **dadurch gekennzeichnet, dass** das Kopplungselement (9) vieleckig ist, vorzugsweise viereckig, bevorzugt rechteckig, besonders bevorzugt quadratisch.

9. System (14) nach Anspruch 8, **dadurch gekennzeichnet, dass** jeder Arm (3a-d) im Bereich eines Eckpunkts des Kopplungselements (9) an diesem fixiert ist.

10. System (14) nach einem der Ansprüche 1 bis 9, **dadurch gekennzeichnet, dass** die Arme (3a-d) jeweils mittels einer zumindest abschnittsweise mäanderförmigen Temperaturausgleichsstruktur (12a-d) am jeweiligen Aufhängungsbereich (6a-d) fixiert sind.

11. System (14) nach einem der Ansprüche 1 bis 10, **dadurch gekennzeichnet, dass** der Rahmen (2) und die Schwingstruktur (4) einstückig aus, vorzugsweise einkristallinem, Silizium gefertigt sind.

12. System (14) nach einem der Ansprüche 1 bis 11, **dadurch gekennzeichnet, dass** mindestens zwei Leitmittel (5a-d) vorgesehen sind und die Steuereinheit (16) zur Beaufschlagung der mindestens zwei Leitmittel (5a-d) mit gegenphasigen Wechselspannungen ausgelegt ist.

13. System (14) nach einem der Ansprüche 1 bis 12, **dadurch gekennzeichnet, dass** die Steuereinheit zur Beaufschlagung des mindestens einen Leitmittels (5a-d) mit mehreren Pulsen von Wechselspannungen nacheinander ausgelegt ist, wobei die unterschiedlichen Pulse Resonanzfrequenzen unterschiedlicher Schwingungsmoden der Schwingstruktur (4), vorzugsweise im unbelasteten Zustand des Kraftsensors (1), umfassen.

14. System (14) nach einem der Ansprüche 1 bis 13, **dadurch gekennzeichnet, dass** die Steuereinheit (16) zur Anregung von Schwingungen der Schwingstruktur (4) in einer Ebene des Rahmens (2) ausgelegt ist.

15. Prothese umfassend ein System (14) nach einem der Ansprüche 1 bis 14.

## Claims

1. System (14) comprising a force sensor (1), the force sensor comprising a frame (2) as well as an oscillation structure (4), which has multiple arms (3a-d) and can oscillate freely in the frame (2), wherein the arms (3a-d) are fixed in place on suspension regions (6a-d) of the frame (2) and run transverse to one another, at least in certain sections,
wherein the force sensor (1) is designed in such a manner that the suspension regions (6a-d) are displaced spatially relative to one another, at least in part, when the frame (2) has a force (7) applied to it, that the magnitude of the spatial displacement (8) of the suspension regions (6a-d) depends on the magnitude of the force (7), that the spatial displacement (8) of the suspension regions (6a-d) brings about detuning of a resonance frequency of at least one oscillation mode of the oscillation structure (4), and that the magnitude of the detuning depends on the magnitude of the spatial displacement (8) of the suspension regions (6a-d), **characterized in that** at least one conducting means (5a-d) is provided, which extends along at least two arms (3a-b; 3b-c; 3c-d; 3d-a), so as to allow a flow of current (i) in the form of moving charge carriers at least between two suspension regions (6a-b; 6b-c; 6c-d; 6d-a), wherein the at least one conducting means (5a-d) can have an alternating voltage applied to it, so as to excite the at least one oscillation mode of the oscillation structure (4) with the resonance frequency, particularly in an unstressed state of the force sensor (1), making use of the Lorentz force (F_{L}), when the oscillation structure (4) is situated in a magnetic field (B),
that the system (14) further comprises read-out means for determination of the resonance frequency,
that a control unit (16) is provided, using which an alternating voltage can be applied to the at least one conducting means (5a-d), so as to excite the oscillation structure (4) to cause it to oscillate, and wherein the control unit (16) is connected with the read-out means (15) for determination of the resonance frequency,
that control unit (16) is designed for applying at least one pulse of alternating voltages to the at least one conducting means (5a-d), so as to excite the oscillation structure (4) to cause it to oscillate, wherein the at least one pulse has a bandwidth of frequencies, which bandwidth comprises the resonance frequency of at least one oscillation mode of the oscillation structure (4), preferably in an unstressed state of the force sensor (1),
and that the system (14) comprises means (17) for generation of the magnetic field (B).

2. System (14) according to claim 1, **characterized in that** the suspension regions (6a-d) are disposed in the region of corners (10a-d) of the frame (2).

3. System (14) according to one of claims 1 to 2, **characterized in that** four corners (10a-d) of the frame (2) are provided, which are disposed in a plane of the frame (2) and preferably form a rectangle, particularly preferably a square in the plane.

4. System (14) according to one of claims 1 to 3, **characterized in that** the frame (2) has at least one meander-shaped section (11a-d), which is preferably disposed between at least two suspension regions (6a-b; 6b-c; 6c-d; 6d-a).

5. System (14) according to one of claims 1 to 4, **characterized in that** the number of arms (3a-d) is a whole-number multiple of four, preferably precisely four.

6. System (14) according to one of claims 1 to 5, **characterized in that** the oscillation structure (4) has a coupling element (9) by means of which the arms (3a-d) are mechanically coupled with one another, wherein each arm (3a-d) is preferably fixed in place on the coupling element (9) with one end.

7. System (14) according to claim 6, **characterized in that** the coupling element (9) forms an edge around a surface that preferably lies in a plane of the frame (2).

8. System (14) according to claim 7, **characterized in that** the coupling element (9) is polygonal, preferably four-cornered, preferably rectangular, particularly preferably square.

9. System (14) according to claim 8, **characterized in that** each arm (3a-d) is fixed in place on the coupling element (9) in the region of a corner point of the coupling element (9).

10. System (14) according to one of claims 1 to 9, **characterized in that** the arms (3a-d) are fixed in place on the respective suspension region (6a-d), in each instance, by means of a temperature-compensation structure (12a-d) that is meander-shaped at least in certain sections.

11. System (14) according to one of claims 1 to 10, **characterized in that** the frame (2) and the oscillation structure (4) are produced in one piece from silicon, preferably mono-crystalline silicon.

12. System (14) according to one of claims 1 to 11, **characterized in that** at least two conducting means (5a-d) are provided and the control unit (16) is designed for applying counter-phase alternating voltages to the at least two conducting means (5a-d).

13. System (14) according to one of claims 1 to 12, **characterized in that** the control unit is designed for application of multiple pulses of alternating voltages to the at least one conducting means (5a-d), one after the other, wherein the different pulses comprise resonance frequencies of different oscillation modes of the oscillation structure (4), preferably in the unstressed state of the force sensor (1).

14. System (14) according to one of claims 1 to 13, **characterized in that** the control unit (16) is designed for excitation of oscillations of the oscillation structure (4) in a plane of the frame (2).

15. Prosthesis comprising a system (14) according to one of claims 1 to 14.

## Revendications

1. Système (14) comprenant un capteur de force (1), lequel capteur de force (1) comprend un cadre (2) et une structure oscillante (4) qui comporte plusieurs bras (3a-d) et qui peut osciller librement dans le cadre (2), les bras (3a-d) étant fixés dans des zones de suspension (6a-d) du cadre (2) et orientés au moins partiellement à l'oblique les uns par rapport aux autres,
dans lequel le capteur de force (1) est conçu de telle façon que les zones de suspension (6ad) se décalent au moins en partie dans l'espace les unes par rapport aux autres quand le cadre (2) est soumis à une force (7), que l'ampleur du déplacement spatial (8) des zones de suspension (6a-d) dépend de la grandeur de la force (7), que le déplacement spatial (8) des zones de suspension (6a-d) provoque un décalage d'une fréquence de résonance d'au moins un mode vibratoire de la structure oscillante (4) et que l'ampleur du décalage dépend de celle du déplacement spatial (8) des zones de suspension (6a-d),
**caractérisé en ce qu'**est prévu au moins moyen conducteur (5a-d) qui s'étend le long d'au moins deux bras (3a-b ; 3b-c ; 3c-d ; 3d-a) pour produire un flux de courant (i) formé de porteurs de charge en mouvement au moins entre deux zones de suspension (6a-b ; 6b-c ; 6c-d ; 6d-a), l'au moins un moyen conducteur (5a-d) pouvant être soumis à une tension de courant alternatif afin d'exciter l'au moins un mode vibratoire de la structure oscillante (4) la fréquence de résonance, en particulier dans un état sans charge du capteur de force (1), en utilisant la force de Lorentz (F_{L}), quand la structure oscillante (4) se trouve dans un champ magnétique (B),
**en ce que** le système (14) comprend en outre des moyens de lecture pour la détermination de la fréquence de résonance,
**en ce qu'**il est prévu une unité de commande (16) avec laquelle l'au moins un moyen conducteur (5a-d) peut être soumis à une tension de courant alternatif pour faire osciller la structure oscillante (4), l'unité de commande (16) étant reliée aux moyens de lecture (15) pour déterminer la fréquence de résonance,
**en ce que** l'unité de commande (16) est conçue pour soumettre l'au moins un moyen conducteur (5a-d) à au moins une impulsion de tensions de courant alternatif pour faire osciller la structure oscillante (4), l'au moins une impulsion ayant une largeur de bande de fréquences, laquelle largeur de bande de fréquences inclut la fréquence de résonance d'au moins un mode vibratoire de la structure oscillante (4), de préférence dans un état sans charge du capteur de force (1),
et **en ce que** le système (14) comprend des moyens (17) pour générer le champ magnétique (B).

2. Système (14) selon la revendication 1, **caractérisé en ce que** les zones de suspension (6a-d) sont disposées au niveau de coins (10a-d) du cadre (2).

3. Système (14) selon l'une des revendications 1 à 2, **caractérisé en ce que** sont prévus quatre coins (10a-d) du cadre (2) qui sont disposés dans un plan du cadre (2) et qui forment de préférence un rectangle, en particulier un carré, dans le plan.

4. Système (14) selon l'une des revendications 1 à 3, **caractérisé en ce que** le cadre (2) présente au moins une partie en méandres (11a-d), qui est disposée de préférence entre au moins deux zones de suspension (6a-b ; 6b-c ; 6c-d ; 6d-a).

5. Système (14) selon l'une des revendications 1 à 4, **caractérisé en ce que** le nombre de bras (3a-d) est un multiple entier de quatre, de préférence exactement quatre.

6. Système (14) selon l'une des revendications 1 à 5, **caractérisé en ce que** la structure oscillante (4) comprend un élément de couplage (9) par lequel les bras (3a-d) sont couplés mécaniquement les uns aux autres, chaque bras (3a-d) étant de préférence fixé à l'élément de couplage (9) à une extrémité.

7. Système (14) selon la revendication 6, **caractérisé en ce que** l'élément de couplage (9) délimite une surface qui se trouve de préférence dans un plan du cadre (2).

8. Système (14) selon la revendication 7, **caractérisé en ce que** l'élément de couplage (9) est polygonal, de préférence quadrangulaire, de préférence rectangulaire, en particulier carré.

9. Système (14) selon la revendication 8, **caractérisé en ce que** chaque bras (3a-d) est fixé à l'élément de couplage (9) au niveau d'un point angulaire de celui-ci.

10. Système (14) selon l'une des revendications 1 à 9, **caractérisé en ce que** les bras (3ad) sont fixés chacun à la zone de suspension (6a-d) correspondante au moyen d'au moins une structure de compensation de la température (12a-d) au moins partiellement en méandres.

11. Système (14) selon l'une des revendications 1 à 10, **caractérisé en ce que** le cadre (2) et la structure oscillante (4) sont fabriqués d'une pièce à partir de silicium, de préférence monocristallin.

12. Système (14) selon l'une des revendications 1 à 11, **caractérisé en ce qu'**au moins deux moyens conducteurs (5a-d) sont prévus et l'unité de commande (16) est conçue pour soumettre les au moins deux moyens conducteurs (5a-d) à des tensions de courant alternatif de phases opposées.

13. Système (14) selon l'une des revendications 1 à 12, **caractérisé en ce que** l'unité de commande est conçue pour soumettre l'au moins un moyen conducteur (5a-d) à plusieurs impulsions de tension de courant alternatif successives, les différentes impulsions comprenant des fréquences de résonance de différents modes vibratoires de la structure oscillante (4), de préférence dans l'état sans charge du capteur de force (1).

14. Système (14) selon l'une des revendications 1 à 13, **caractérisé en ce que** l'unité de commande (16) est conçue pour exciter des oscillations de la structure oscillante (4) dans un plan du cadre (2).

15. Prothèse comprenant un système (14) selon l'une des revendications 1 à 14.
